# EUROPÄISCHE PATENTSCHRIFT

(11) **EP 2 220 139 B1**
(45) Veröffentlichungstag und Bekanntmachung des Hinweises auf die Patenterteilung: **17.01.2018**
(21) Anmeldenummer: 08805158.6
(22) Anmeldetag: 09.10.2008
(51) Int. Cl.: C08G 18/61, C09D 175/04, C08J 7/04

(54) **POLYMERMISCHUNG**
POLYMER MIXTURE
MÉLANGE POLYMÈRE

(30) Priorität: 07.12.2007 DE 102007059090
(43) Veröffentlichungstag der Anmeldung: 25.08.2010
(73) Patentinhaber: Benecke-Kaliko AG, 30419 Hannover (DE)
(72) Erfinder: IBEN, Dirk, 23611 Sereetz (DE); KOCH, Heino, 31061 Alfeld (DE)
(74) Vertreter: Widjaja, Wira
(86) Internationale Anmeldenummer: PCT/EP2008/063504
(87) Internationale Veröffentlichungsnummer: WO 2009/071359

(56) Entgegenhaltungen:
- WO-A-2004/060949
- DE-A-102005 041 951
- US-A- 4 933 237
- US-A- 5 272 012
- US-A- 5 798 409

## Beschreibung

Die Erfindung betrifft eine Polymermischung, insbesondere für Dekoroberflächen im Automobilinnenraum.

Dekoroberflächen für Formteile aus einem mit einer Folie versehenen Kunststoffmaterial sind weitreichend bekannt. Vorzugsweise wird als Basismaterial ein Kunststoffmaterial eingesetzt, welches aus einer Polymermischung besteht, die auf der Basis von Polyvinylchlorid (PVC), insbesondere Weich-PVC, Polyurethan (PUR), Polyolefin, Polyester (PES), Acrylnitril-Butadien-Styrol-Copolymer (ABS), Polymethylmethacrylat, Polycarbonat, Polyacrylat oder Mischpolymeren ist. Hier sei beispielhaft für weitere Literatur auf "Jahnke, Manfred; Mielke, Dirk; Van Well, Michael: Dekorative Oberflächen aus Pasten PVC für den Automobilinnenraum. - In: SKZ-Fachtagung "PVC-Pasten" am 19./20.09.2007. Süddeutsches Kunststoff-Zentrum, Würzbrug, 2007" verwiesen.

Die Polymermischung wird auf der Dekoroberfläche vorzugsweise als Deck- und / oder Lackschicht für die Dekoroberfläche eingesetzt, wobei die Lackschicht auch aus einer oder mehreren gleichen oder unterschiedlichen Polymermischungen bestehen kann. Zur Einstellung des Reibungsverhaltens, der Haptik, besonders der Berührhaptik, der Rheologie, des Mattierungsverhaltens, und der Licht- und Wärmebeständigkeit werden der Polymermischung verschiedene Vernetzerkomponenten, Mattierungsmittel und Additive, auch als weitere Zusatzstoffe bezeichnet, zugegeben.

Aus den bisher bekannten Polymermischungen für Dekoroberflächen ergeben sich zwei signifikante Nachteile:
I. Das Niveau der Oberflächeneigenschaften von Dekoroberflächen, bevorzugt im Automobilinnenraum, bezüglich der Eigenschaften Schreibempfindlichkeit, Anschmutz- und Reinigungsverhalten und Abriebfestigkeit genügt in der Summe im Anlieferungszustand nicht den Anforderungen des aktuellen Marktes.
II. Diese Dekoroberflächen unterliegen im eingebauten Zustand einer fortwährenden Beanspruchung durch Gebrauch. In diesem Zustand starker Beanspruchung zeigen die mit den bisherigen Polymermischungen beschichteten Dekoroberflächen bezüglich Schreibempfindlichkeit, Anschmutz- und Reinigungsverhalten, Abriebfestigkeit und AntiKnarz-Verhalten eine deutliche Verschlechterung gegenüber dem Anlieferungsszustand. Dies entspricht nicht den Anforderungen des Marktes.

Zum Stand der Technik bezüglich bisheriger Polymermischungen, vorzugsweise für Dekoroberflächen, sind folgende Druckschriften zu würdigen:
(D1) DE 102005049521 A1
(D2) DE 102005049520 A1
(D3) DE 102005020605 A1
(D4) US 6013364
(D5) US 5034275
(D6) US 4933237
(D7) EP 0596932 B1
(D8) US 5268215

Aus D1, D2 und D3 sind Verfahren zur Herstellung radikalisch vernetzbarer Beschichtungsmittel bekannt. Das Beschichtungsmittel enthält hierbei ein oder mehrere Oligo- und / oder ein oder mehrere Polyurethan(meth)acrylate und eine radikalisch vernetzbare Komponente, die Carbamat- und / oder Biuret und / oder Allophanat- und / oder Harnstoff- und / oder Amidgruppen enthält oder eine radikalisch vernetzbare Komponente, die Wasserstoffbrücken-bildende Strukturelemente aufweist.

D4 beschreibt ein Verfahren zur Umgestaltung eines Kunststoffartikels, damit diese ein lederartiges Berührungsempfinden erhält. Der verwendete 2-phasige PUR-Lack ist hierbei ein Lösemittel-basierendes Polyester-Polyol-System enthaltend Polyester-Polyol, mit einem durchschnittlichen Molekulargewicht zwischen 1000 bis 5000 und einem Hydroxylwert zwischen 60 bis 200, und Hexamethylen-Diisocyanat.

Ein Wasser-basierendes Polyurethan-System, bestehend aus einem Copolymer mit ungesättigten Carbonsäure-Gruppen auf einer Polyester-Trägerfolie, ist aus D5 und D6 bekannt. Wobei das Polyurethan in D6 aus einem Polyurethan-Vorpolymer abgeleitet ist, dessen Kette aliphatischen Polyamine enthält und an dessen Kettenenden sich N-Methylol-Hydrazidgruppen befinden.

Aus D7 ist eine kratzfestige Polymerzusammensetzung bekannt, die mindestens 50 Gew. - % eines Propylenblockcoplymers mit statistisch aufgebauten Ethylen/Propylen-Komponenten, 15 - 30 Gew. -% eines plättchenförmigen anorganischen Füllstoffs, 0,5 - 5 Gew. -% eines Polyorganosiloxans und 0,1 - 2 Gew. -% eines Epoxidharzes enthält.

D8 offenbart eine Klarlackbeschichtung, die aus einem Reaktionsprodukt von Polyisocyanat und reaktivem Polydialkysiloxan besteht.

Wie bereits erwähnt entsprechen die in den genannten Druckschriften offenbarten Polymerzusammensetzungen nicht mehr den Anforderungen des aktuellen Marktes. Daher liegt der vorliegenden Erfindung nun die Aufgabe zu Grunde, eine Polymermischung, insbesondere zur Verwendung als Dekoroberflächen im Automobilinnenraum, zur Verfügung zu stellen, die eine Verbesserung der Dauergebrauchstüchtigkeit hinsichtlich der Eigenschaften Schreibempfindlichkeit, Anschmutz- und Reinigungsverhalten, Abriebfestigkeit und AntiKnarz-Verhalten im Anlieferungszustand als auch im beanspruchten Zustand zeigt.

Gelöst wird die Aufgabe dadurch, dass die Polymermischung der oben genannten Art durch folgende Zusammensetzung gekennzeichnet ist:
- 0 bis 50 Gew. -% zumindest einer wässrigen Polyurethan-Dispersion und / oder Polyester-Dispersion und / oder Polyether-Dispersion und / oder Polyester-Polyacrylat-Dispersion und / oder Polyacrylat-Polyurethan-Dispersion und / oder Polyacrylat-Dispersion und / oder einer Dispersion auf der Basis mindestens eines dieser und / oder mehrerer anderer Polymere;
- 1 bis 60 Gew. -% zumindest einer wässrigen Polyurethan-Dispersion und / oder Polyesterpolyol-Dispersion und / oder Polyetherpolyol-Dispersion und / oder Polyacrylatpolyol-Dispersion und / oder einer Dispersion auf der Basis mindestens eines dieser und / oder mehrerer anderer Polymere, wobei das Polymer oder zumindest ein Polymer mit OH-Gruppen und / oder NH-Gruppen funktionalisiert ist und einen OH-Gehalt oder NH-Gehalt zwischen 0,3 und 6,0 Gew. -% , bezogen auf den nicht-flüchtigen Anteil der Gesamtmenge der Polymere, besitzt;
- 0,1 bis 40 Gew. -% zumindest eines nicht-funktionalisierten Gleitadditivs;
- 1 bis 40 Gew. -% zumindest eines funktionalisierten Gleitadditivs;
- 0,2 bis 50 Gew. -% zumindest eines Vernetzers oder Vernetzersytems;
- 0,1 bis 75 Gew. -% zumindest eines Mattierungsmittels;
- 0 bis 50 Gew. -% Verdünnungsmittel;
- 0 bis 50 Gew. -% weitere Zusatzstoffe, bezogen auf den nicht-flüchtigen Anteil der Gesamtmenge der Polymere.

Die in dieser Schrift verwendeten Angaben in Gew. -% beziehen sich immer auf die Lieferform der jeweiligen Mischungskomponente.

Überraschenderweise wurde gefunden, dass durch die Kombination von obig beschriebenem Polymersystem, insbesondere in Verbindung mit zumindest einem funktionalisierten Gleitadditiv, einem nicht-funktionalisierten Gleitadditiv und einem Mattierungsmittel, eine Verbesserung der Dauergebrauchstüchtigkeit, bevorzugt von Dekoroberflächen im Automobilinnenraum, erzielen lässt.

Dadurch wird es möglich, den Anforderungen des Marktes gerecht zu werden und die benötigten Eigenschaften wie Schreibempfndlichkeit, Anschmutz- und Reinigungsverhalten, Abriebfestigkeit und AntiKnarz-Verhalten nicht nur im Anlieferungszustand, sondern vor allem auch im beanspruchten Zustand zu verbessern.

Die Polymermischung enthält 0 bis 50 Gew. -%, wenigstens 0,1 Gew. -%, insbesondere wenigstens 0,5 Gew. -%, zumindest einer wässrigen Polyurethan-Dispersion und / oder Polyester-Dispersion und / oder Polyether-Dispersion und / oder Polyester-Polyacrylat-Dispersion und / oder Polyacrylat-Polyurethan-Dispersion und / oder Polyacrylat-Dispersion und / oder einer Dispersion auf der Basis mindestens eines dieser und / oder mehrerer anderer Polymere. Fakultativ kann in den genannten Dispersionen als zusätzlicher weiterer Bestandteil zumindest ein Silicon enthalten sein, wobei der Begriff Silicon in dieser Schrift, wie z.B. in W. Büchner et al. "Industrielle Anorganische Chemie", Verlag Chemie, Weinheim, Kap. 4 ff., 1986 oder in D. Stoye und W. Freitag, "Lackharze", Carl Hanser Verlag München Wien, Kap. 9 ff., 1996 beschrieben, verwendet wird. Bevorzugt enthält die Polymermischung eine wässrige Polyurethan-Dispersion, die besonders bevorzugt hochmolekular und aliphatisch ist. Hochmolekular bedeutet in diesem Zusammenhang, dass das Polyurethan mehr als 10 Monomereinheiten besitzt.

Des Weiteren enthält die Polymermischung 1 bis 60 Gew. -%, bevorzugt 2,5 bis 40 Gew. - % und besonders bevorzugt 5 bis 30 Gew. -%, zumindest einer wässrigen Polyurethan-Dispersion und / oder Polyesterpolyol-Dispersion und / oder Polyetherpolyol-Dispersion und / oder Polyacrylatpolyol-Dispersion und / oder einer Dispersion auf der Basis mindestens eines dieser und / oder mehrerer anderer Polymere, wobei das Polymer oder zumindest ein Polymer mit OH-Gruppen und / oder NH-Gruppen funktionalisiert ist und einen OH-Gehalt und / oder NH-Gehalt zwischen 0,3 und 6,0 Gew. -%, bezogen auf den nicht-flüchtigen Anteil der Gesamtmenge der Polymere, besitzt. Fakultativ kann in den genannten Dispersionen als zusätzlicher weiterer Bestandteil zumindest ein Silicon enthalten sein.

Bevorzugt enthält die Polymermischung eine wässrige und mit OH-Gruppen funktionalisierte Polyurethan-Dispersion, wobei der Gehalt an OH-Gruppen zwischen 0,3 und 6,0 Gew. -%, bevorzugt zwischen 0,5 und 5,0 Gew. -%, besonders bevorzugt zwischen 0,7 und 4,8 Gew. -%, bezogen auf den nicht-flüchtigen Anteil des Polymers, beträgt.

Die Polymermischung enthält erfindungsgemäß weiterhin 0, 1 bis 40 Gew. -%, bevorzugt 0,1 bis 30 Gew. -%, besonders bevorzugt 0,1 bis 20 Gew. -% und wiederum besonders bevorzugt 0,1 bis 10 Gew. -%, insbesondere wenigstens 0,5 Gew. -%, zumindest eines nicht-funktionalisierten Gleitadditives.

Bei dem nicht-funktionalisierten Gleitadditiv handelt es sich um ein Polydialkylsiloxan und / oder Polydimethylsiloxan (PDMS) und / oder modifizierte Polysiloxane und / oder verzweigte Polyorganosiloxane und / oder polyolefinische Wachse und / oder Polyamid-Wachse und / oder Polytetrafluorethylen (PTFE) und / oder alternierende Ethylen-chloro-tri-fluoroethylen-Copolymere (ECTFE) und / oder perfluorierte Alkoxyharze (PFA) und / oder natürliche Wachse, wie z. B. Carnaubawachse. Bevorzugt ist allerdings, dass das nicht-funktionalisierte Gleitadditiv ein Polydimethylsiloxan ist und zwischen 10 und 14000 D-Silicon-Baueinheiten hat.

Erfindungswesentlich bzw. zweckmäßig ist, dass die Polymermischung 1 bis 40 Gew. -%, bevorzugt 1 bis 30 Gew. -%, besonders bevorzugt 1 bis 20 Gew. -% und wiederum besonders bevorzugt 1 bis 10 Gew. -%, zumindest eines funktionalisierten Gleitadditivs enthält, wobei ein funktionalisiertes und modifiziertes Polysiloxan-Gleitadditiv bevorzugt ist.

Das funktionalisierte Gleitadditiv ist mit primären und / oder sekundären und / oder tertiären Aminogruppen und / oder OH-Gruppen modifiziert.

Das funktionalisierte Gleitadditiv hat eine Aminzahl zwischen 0,1 und 3,0 mg KOH / g und / oder einen OH-Gehalt zwischen 0,3 und 5,0 Gew. -%.

Die Gesamtmenge an nicht-funktionalisiertem Gleitadditiv und funktionalisiertem Gleitadditiv beträgt 1 bis 40 Gew. -%, bevorzugt 5 bis 25 Gew. -%, jeweils bezogen auf den nicht-flüchtigen Anteil der Gesamtmenge der Gleitadditive zu dem nicht-flüchtigen Anteil der Gesamtmenge aller Bestandteile der Polymermischung.

Die Polymermischung enthält 0,2 bis 50 Gew. -% zumindest eines Vernetzers oder eines Vernetzersystems.

Der Vernetzer oder das Vernetzersystem der Polymermischung ist auf Basis Polyisocyanat und / oder Polyepoxid und / oder Epoxysilan und / oder Alkoxymethylmelamin und / oder Harnstoffharz und / oder auf Basis Polycarbodiimid und / oder Polyaziridin, wobei die Basis Polyisocyanat bevorzugt wird.

Falls das Polyisocyanat die Basis des Vernetzers oder des Vernetzersystems darstellt, so hat das Polyisocyanat einen NCO-Anteil zwischen 5 und 30 Gew. -%, bevorzugt zwischen 7 und 25 Gew. -%. Das Polyisocyanat hat hierbei ein Vernetzungsverhältnis von NCO zu OH zwischen 1,0 und 15,0, bevorzugt zwischen 1,0 und 10,0, und / oder ein Vernetzungsverhältnis von NCO zu NHₓR₃₋ₓ zwischen 1,0 und 5,0, wobei x einen Wert zwischen 0,1 und 2,9 annehmen kann.

Das Polyisocyanat kann ein Hexamethylendiisocyanat (HDI) und / oder ein Isophorondiisocyanat (IPDI) und / oder ein 4,4'-Dicyclohexylmethandiisocyanat (H₁₂MDI) und / oder ein Hexahydrotoluylendiisocyanat (H₆TDI) sein, wobei jedes dieser Polyisocyanate als Biuret oder Uretdion oder Allophanat oder Isocyanurat oder Iminooxadiazindion vorliegen kann.

Der NCO-Gehalt der durch den Vernetzer oder durch das Vernetzersystem vernetzten Polymermischung liegt zwischen 0,2 und 9,0%, bevorzugt zwischen 0,3 und 8,0%.

Zur Vernetzung kommen alle dem Fachmann bekannten Vernetzungsarten in Frage. Hier sind beispielhaft chemische und / oder physikalische Vernetzungsarten, wie Amin-Vernetzung, Arizidin-Vernetzung, Carbodiimid-Vernetzung, Enamin-Vernetzung, Epoxid-Vernetzung, Epoxysilan-Vernetzung, Harnstoff-Vernetzung, Hydrazid-Vernetzung, Melamin-Vernetzung oder oxidative Trocknung genannt. Auch selbst-vernetzende Systeme, wie Azomethin-Vernetzung, eine Carbonyl-Amin-Reaktion, die durch Verdunstung des Neutralisationsmittels und des Wassers erfolgt, Autooxidation oder UVwässrig sind denkbar. Weitere mögliche Vernetzungsarten sind die Silan-Vernetzung und / oder die Strahlenvernetzung, z.B. durch UV-Strahlung. Ebenso ist eine Dual-Cure-Vernetzung, d.h. eine Kombination der Polyurethan- und der UV-Vernetzungschemie möglich.

Erfindungsgemäß enthält die Polymermischung weiterhin 0,1 bis 75 Gew. -%, bevorzugt 0,1 bis 50 Gew. -%, insbesondere wenigstens 0,5 Gew. -%, zumindest eines Mattierungsmittels, wobei das Mattierungsmittel auf der Basis einer wässrigen Polyurethan-Dispersion ist und / oder auf der Basis polmerorganischer Verbindungen mattiert.

In der Polymermischung sind 0 bis 50 Gew. -%, wenigstens 0,1 Gew. -%, insbesondere wenigstens 0,5 Gew. -%, Verdünnungsmittel enthalten, wobei das Verdünnungsmittel als Gemisch aus Wasser und 2-Propanol in veränderlichen Gewichtsanteilen vorliegen kann.

Weitere Zusatzstoffe sind in Mengen von 0 bis 50 Gew. -%, bevorzugt in Mengen von 0 bis 45 Gew. -%, besonders bevorzugt in Mengen von 0 bis 35 Gew. -%, wenigstens in Mengen von 0,1 Gew. -%, insbesondere wenigstens in Mengen von 0,5 Gew. -%, in der Polymermischung enthalten. Die Zusatzstoffe sind hierbei ausgewählt aus der Gruppe, bestehend aus Licht-schutzmitteln, wie UV-Absorber und reversible Radikalfänger, und / oder Antioxidationsmittel und / oder Netzmittel und / oder Substratnetzmittel und / oder Emulgatoren und / oder Verlaufmittel und / oder filmbildende Hilfsmittel und / oder Rheologiehilfsmittel und / oder Flammschutzmittel und / oder Biozide und / oder Neutralisationsmittel und / oder Entschäumer und / oder Verdicker und / oder anorganische Füllstoffe und / oder organische Füllstoffe und / oder Pigmente.

Bevorzugt ist, wenn 0 bis 25 Gew. -% organische Füllstoffe und / oder anorganische Füllstoffe und / oder Pigmente enthalten sind.

Zusätzlich können weitere, dem Fachmann bekannte, Zusatzstoffe eingesetzt werden.

Beschrieben werden diese Zusatzstoffe unter anderem in:
- Lehrbuch "Lackadditive" von Johann Bielemann, Wiley-VCH, Weinheim, New York 1998.
- Lehrbuch der Lacke und Beschichtungen, Band 4 (Lösemittel, Weichmacher, Additive), herausgegeben von Martina Oertelt, 2. Auflage, S. Hirzel Verlag, Stuttgart 2007.

Die erfindungsgemäße Polymermischung findet als abriebfestes Material, vor allem in Form einer Armaturentafel oder eines Innenverkleidungsteils, insbesondere eines Sitzbespannmaterials, für ein Fahrzeug, Verwendung.

Sie dient als Oberfläche eines abriebfesten Produktes, vor allem in Form einer Armaturentafel oder eines Innenverkleidungsteils, insbesondere eines Sitzbespannmaterials, für ein Fahrzeug.

Des Weiteren kann die Polymermischung als Beschichtungsmaterial verwendet werden, wobei sie sowohl als einschichtiges als auch als mehrschichtiges Beschichtungsmaterial verwendet werden kann. Die resultierende Gesamttrockenschichtdicke über alle Schichten beträgt zwischen 0,5 und 50 g/m², bevorzugt zwischen 1 und 35 g/m².

Die Polymermischung soll nun anhand eines Ausführungsbeispiels A, bestehend aus einem Fondlack und einem Schlußlack, und einer Referenzprobe R, bestehend aus einem Fondlack und einem Schlußlack, und entsprechenden Versuchsergebnissen, die in Tabelle 1 dargestellt sind, näher erläutert werden.

**Ausführungsbeispiel A**

| **Fondlack:** | Gew. -% |
|---|---|
| wässrige, aliphatische Polyurethan-Dispersion | 50,0 |
| pyrogene Kieselsäure | 5,0 |
| Verdünnung (2-Propanol / Wasser 50/50) | 28,6 |
| Entschäumer | 0,4 |
| Substratnetzmittel | 0,4 |
| nicht-funktionalisiertes Gleitadditiv | 3,4 |
| funktionalisiertes Gleitadditiv | 6,0 |
| Vernetzer (HDI-Isocyanurat, 17,4% NCO) | 6,2 |

| **Schlußlack:** | Gew. -% |
|---|---|
| wässrige, aliphatische Polyurethan-Dispersion, 1,5% OH-Gehalt | 13,7 |
| wässrige, aliphatische Polyurethan-Dispersion mit polymerorganischer Mattierung | 42,7 |
| Verdünnung (2-Propanol / Wasser 50/50) | 28,0 |
| Dimethylaminoethanol | 0,2 |
| Entschäumer | 2,0 |
| Substratnetzmittel | 0,7 |
| nicht-funktionalisiertes Gleitadditiv (PDMS) | 3,1 |
| funktionalisiertes, modifiziertes Polysiloxan-Gleitadditiv, (Aminzahl 0,6mg KOH/g) | 5,5 |
| Verdicker | 3,0 |
| Vernetzer (HDI-Isocyanurat, 17,4% NCO) | 7,2 |

Resultierende Gesamttrockenschichtdicke: Fondlack 7g/m² + Schlußlack 8,5g/m²

**Referenzprobe R**

| **Fondlack:** | Gew. -% |
|---|---|
| wässrige, aliphatische Polyurethan-Dispersion | 38,5 |
| Mattierungsbatch (2-Propanol / Wasser / pyrogene Kieselsäure) | 30,1 |
| Verdünnung (2-Propanol / Wasser 50/50) | 7,6 |
| Dimethylaminoethanol | 0,2 |
| Entschäumer | 0,3 |
| Substratnetzmittel | 0,3 |
| Verdicker | 4,2 |
| Wasser | 18,2 |
| Vernetzer (HDI-Isocyanurat, 17,4% NCO) | 0,6 |

| **Schlußlack:** | Gew.-% |
|---|---|
| wässrige, aliphatische Polyurethan-Dispersion | 15,3 |
| wässrige, aliphatische Polyurethan-Dispersion mit polymerorganischer Mattierung | 46,9 |
| Verdünnung (2-Propanol / Wasser 50/50) | 15,5 |
| Dimethylaminoethanol | 0,1 |
| Entschäumer | 0,7 |
| Substratnetzmittel | 0,7 |
| nicht-funktionalisiertes Gleitadditiv (PDMS) | 5,0 |
| funktionalisiertes, modifiziertes Polysiloxan-Gleitadditiv, (Aminzahl 0,6mg KOH/g) | 9,0 |
| Verdicker | 1,3 |
| Vernetzer (HDI-Isocyanurat, 17,4% NCO) | 1,1 |
| Vernetzer (HDI-Iminooxadiazindion, 23,5% NCO) | 4,5 |

Resultierende Gesamttrockenschichtdicke: Fondlack 7g/m² + Schlußlack 3g/m²

In der Tabelle sind die entsprechenden DIN-Normen der einzelnen Prüfungen aufgeführt. Folgende Prüfungen wurden nicht nach DIN-Norm durchgeführt und sind daher näher beschrieben.

### Anschmutzverhalten:

Die Durchführung, d. h. das Anschmutzen findet in Anlehnung an DIN EN ISO 12947-2 statt.

Die Durchführung erfolgt in Anlehnung an DIN EN ISO 12947-2. Das für den Anschmutzversuch vorgeschriebene Aufsteckgewicht beträgt 12kPa über 5000 Anschmutztouren ohne Unterbrechung. Die angeschmutzten Proben werden aus den Probenhaltern entnommen und mittig geteilt um die Hälfte der Probe mit einem handelsüblichen Innenreiniger zu reinigen. Die Beurteilung erfolgt farbmetrisch.

### Beanspruchung durch Fingernagel (Fingernageltest):

Die Prüftemperatur beträgt 23°C.

Der Prüfkörper ist eine Kunststoffscheibe mit einem Radius r = 8mm, einer Dicke d=1mm, und einer ShoreA-Härte von D85.

Der Prüfkörper wird dabei mit einer Anpreßkraft von 15N, 25N und 30N mit 15cm/s und mit der schmalen Seite über die Probe gezogen.

Eine Kratzspur ist eine bleibende sichtbare Beschädigung der Oberfläche. Eine Schreibspur ist eine sichtbare Veränderung der Oberfläche ohne Beschädigung.

### inverser Martindale:

Die Durchführung erfolgt analog zu DIN EN ISO 12947-2, mit dem Unterschied, dass das Scheuermittel in den Probenhalterkopf und dass die Messprobe in die Probenhalterführungsplatte eingelegt werden.

Die Abkürzung i.O. bedeutet "in Ordnung", d.h. es ist kein auffälliger Befund, sprich kein Abrieb oder ein Kratzen, aufgetreten.

| | | **A** | **R** |
|---|---|---|---|
| **Dauerfaltverhalten (Bally-Flexometer)** | DIN 53351 (längs / quer) | | |
| 150.000 Flexe | bei RT | 0 | 0 |
| 20.000 Flexe | nach 1 Zyklus DIN EN ISO 105 B06, Expositionsbedingung 3 | 0 | 0 |
| 100.000 Flexe | bei RT; nach 500h 100°C | 0 | 0 |
| 10.000 Flexe | bei -10°C; nach 500h 100°C | 0 | 0 |
| | | | |
| **Martindale, 12kPa** | DIN EN ISO 12947-2 | | |
| 60.000 Touren | mit Reinigung (Wasser) | i. O. | beginnender Kuppenabrieb |
| 80.000 Touren | mit Reinigung (Wasser) | i. O. | Kuppenabrieb |
| | | | |
| **Aufpolierbarkeit mittels inversem Martindale, 12kPa** | nach DIN EN ISO 12947-2 | | |
| 60°-Glanzmessung (300 Skalenteile [Skt.]) | (nach DIN EN ISO 2813) | | |
| unbeansprucht | | 2.0 Skt. | 2,0 Skt. |
| 25.000 Touren | | 2,4 Skt. | 2.6 Skt. |
| 100.000 Touren | | 2.8 Skt. | 5,4 Skt. |
| | | | |
| **Veslic** | DIN EN ISO 11640 (Spur) | | |
| trocken | 500 Hübe | i. O. | beginnender Lackabrieb |
| | 2.000 Hübe | i. O. | Lackabrieb |
| naß | 500 Hübe | i. O. | i. O. |
| | 2.000 Hübe | i. O. | i. O. |
| | | | |
| **Reibverhalten nach DIN EN ISO 8295** | | | |
| Haftreibung | | 0.29 | 0,35 |
| Gleitreibung | | 0.21 | 0.26 |
| SlipStick [N] | | - | - |
| | | | |
| **Knarz-Verhalten** | VDA 230-206 Teil 3 (Entwurf) | | |
| Anlieferung | Risikoprioritäts (RPZ)-Zahl | 1 | 1 |
| nach 25.000 Touren inverser Martindale, 12 kPa | Risikoprioritäts (RPZ)-Zahl | 1 | 7 |
| nach 100.000 Touren inverser Martindale, 12 kPa | Risikoprioritäts (RPZ)-Zahl | 8 | 8 |
| nach Wärmelagerung 500h 100°C | Risikoprioritäts (RPZ)-Zahl | 3 | 1 |
| | | | |
| **Fingernageltest** | | | |
| 25N | | i. O. | sehr leichte Schreibspur |
| 30N | | i. O. | sehr leichte Schreibspur |
| 25N | nach 500°C 100°C | leichte SchreibsDur | leichte leicht Schreibspur |
| | | | |
| **Anschmutzverhalten** | Farbmessung (D65, 8° diffus): ΔL* | | |
| Substrat in Farbe Grau | angeschmutzt | -0,94 | -1.41 |
| | gereinigt (BMW-Innenreiniger) | -0,23 | -0,31 |

Eine Verbesserung hinsichtlich der vom Markt geforderten Dauergebrauchstüchtigkeit, hinsichtlich der Eigenschaften Schreibempfindlichkeit, Anschmutz- und Reinigungsverhalten, Abrieb festigkeit und AntiKnarz-Verhalten im Anlieferungszustand als auch im beanspruchten Zustand ist anhand des Ausführungsbeispiels A im Vergleich zu einer Referenzprobe R deutlich zu sehen.

## Patentansprüche

1. Polymermischung, insbesondere für Dekoroberflächen im Automobilinnenraum, **gekennzeichnet durch** folgende Zusammensetzung:
- 0 bis 50 Gew. -% zumindest einer wässrigen Polyurethan-Dispersion und / oder Polyester-Dispersion und / oder Polyether-Dispersion und / oder Polyester-Polyacrylat-Dispersion und / oder Polyacrylat-Polyurethan-Dispersion und / oder Polyacrylat-Dispersion und / oder einer Dispersion auf der Basis mindestens eines dieser und / oder mehrerer anderer Polymere;
- 1 bis 60 Gew. -% zumindest einer wässrigen Polyurethan-Dispersion und / oder Polyesterpolyol-Dispersion und / oder Polyetherpolyol-Dispersion und / oder Polyacrylatpolyol-Dispersion und / oder einer Dispersion auf der Basis mindestens eines dieser und / oder mehrerer anderer Polymere, wobei das Polymer oder zumindest ein Polymer mit OH-Gruppen und / oder NH-Gruppen funktionalisiert ist und einen OH-Gehalt oder NH-Gehalt zwischen 0,3 und 6,0 Gew. -% , bezogen auf den nicht-flüchtigen Anteil der Gesamtmenge der Polymere, besitzt;
- 0,1 bis 40 Gew. -% zumindest eines nicht-funktionalisierten Gleitadditivs;
- 1 bis 40 Gew. -% zumindest eines funktionalisierten Gleitadditivs;
- 0,2 bis 50 Gew. -% zumindest eines Vernetzers oder Vernetzersytems;
- 0,1 bis 75 Gew. -% zumindest eines Mattierungsmittels;
- 0 bis 50 Gew. -% Verdünnungsmittel;
- 0 bis 50 Gew. -% weitere Zusatzstoffe, bezogen auf den nicht-flüchtigen Anteil der Gesamtmenge der Polymere.

2. Polymermischung nach Anspruch 1, **dadurch gekennzeichnet, dass** sie wenigstens 0,1 Gew. -%, insbesondere wenigstens 0,5 Gew. -%, einer wässrigen Polyurethan-Dispersion und / oder Polyester-Dispersion und / oder Polyether-Dispersion und / oder Polyester-Polyacrylat-Dispersion und / oder Polyacrylat-Polyurethan-Dispersion und / oder Polyacrylat-Dispersion und / oder einer Dispersion auf der Basis mindestens eines dieser und / oder mehrerer anderer Polymere enthält.

3. Polymermischung nach Anspruch 1 oder 2, **dadurch gekennzeichnet, dass** sie 2,5 bis 40 Gew. -% einer wässrigen Polyurethan-Dispersion und / oder Polyesterpolyol-Dispersion und / oder Polyetherpolyol-Dispersion und / oder Polyacrylatpolyol-Dispersion und / oder einer Dispersion auf der Basis mindestens eines dieser und / oder mehrerer anderer Polymere, wobei das Polymer oder zumindest ein Polymer mit OH-Gruppen und / oder NH-Gruppen funktionalisiert ist und einen OH-Gehalt und / oder NH-Gehalt zwischen 0,3 und 6,0 Gew. -%, bezogen auf den nicht-flüchtigen Anteil der Gesamtmenge der Polymere hat, besitzt.

4. Polymermischung nach einem der Ansprüche 1 bis 3, **dadurch gekennzeichnet, dass** sie eine wässrige und mit OH-Gruppen funktionalisierte Polyurethan-Dispersion enthält.

5. Polymermischung nach Anspruch 4, **dadurch gekennzeichnet, dass** der Gehalt an OH-Gruppen der wässrigen und mit OH-Gruppen funktionalisierten Polyurethan-Dispersion zwischen 0,5 und 5,0 Gew.-%, bezogen auf den nicht flüchtigen Anteil des Polymers, beträgt.

6. Polymermischung nach einem der Ansprüche 1 bis 5, **dadurch gekennzeichnet, dass** sie 0,1 bis 30 Gew. -% eines nicht-funktionalisierten Gleitadditivs enthält.

7. Polymermischung nach einem der Ansprüche 1 bis 6, **dadurch gekennzeichnet, dass** sie wenigstens 0,5 Gew. -%, eines nicht-funktionalisierten Gleitadditivs enthält.

8. Polymermischung nach einem der Ansprüche 1 bis 7, **dadurch gekennzeichnet, dass** das nicht-funktionalisierte Gleitadditiv ein Polydialkylsiloxan und / oder Polydimethylsiloxan (PDMS) und / oder modifizierte Polysiloxane und / oder verzweigte Polyorganosiloxane und / oder polyolefinische Wachse und / oder Polyamid-Wachse und / oder Polytetrafluorethylen (PTFE) und / oder alternierende Ethylen-chloro-tri-fluoroethylen-Copolymere (ECTFE) und / oder perfluorierte Alkoxyharze (PFA) und / oder natürliche Wachse ist.

9. Polymermischung nach einem der Ansprüche 1 bis 8, **dadurch gekennzeichnet, dass** das nicht-funktionalisierte Gleitadditiv ein Polydimethylsiloxan ist.

10. Polymermischung nach Anspruch 9, **dadurch gekennzeichnet, dass** das Polydimethylsiloxan zwischen 10 und 14000 D-Silicon-Baueinheiten hat.

11. Polymermischung nach einem der Ansprüche 1 bis 10, **dadurch gekennzeichnet, dass** sie 1 - 30 Gew. -% eines funktionalisierten Gleitadditivs enthält.

12. Polymermischung nach einem der Ansprüche 1 bis 11, **dadurch gekennzeichnet, dass** das funktionalisierte Gleitadditiv ein funktionalisiertes und modifiziertes Polysiloxan-Gleitadditiv ist.

13. Polymermischung nach Anspruch 12, **dadurch gekennzeichnet, dass** das funktionalisierte Gleitadditiv mit primären und / oder sekundären und / oder tertiären Aminogruppen und / oder OH-Gruppen modifiziert ist.

14. Polymermischung nach Anspruch 12 oder 13, **dadurch gekennzeichnet, dass** das funktionalisierte Gleitadditiv eine Aminzahl zwischen 0,1 und 3,0 mg KOH / g und / oder einen OH-Gehalt zwischen 0,3 und 5,0 Gew. -% hat.

15. Polymermischung nach einem der Ansprüche 1 bis 14, **dadurch gekennzeichnet, dass** die Gesamtmenge an nicht-funktionalisiertem Gleitadditiv und funktionalisiertem Gleitadditiv 1 bis 40 Gew. -% beträgt, bezogen auf den nicht-flüchtigen Anteil der Gesamtmenge der Gleitadditive zu dem nicht-flüchtigen Anteil der Gesamtmenge aller Bestandteile der Polymermischung.

16. Polymermischung nach einem der Ansprüche 1 bis 15, **dadurch gekennzeichnet, dass** der Vernetzer oder das Vernetzersystem auf der Basis zumindest eines Polyisocyanats und / oder Polyepoxids und / oder Epoxysilans und / oder Alkoxymethylmelamins und / oder Harnstoffharz und / oder auf der Basis zumindest eines Polycarbodiimids und / oder Polyaziridins ist.

17. Polymermischung nach einem der Ansprüche 1 bis 16, **dadurch gekennzeichnet, dass** der Vernetzer oder das Vernetzersystem auf der Basis eines Polyisocyanats ist.

18. Polymermischung nach Anspruch 17, **dadurch gekennzeichnet, dass** das Polyisocyanat einen NCO-Anteil zwischen 5 und 30 Gew. -% hat.

19. Polymermischung nach einem der Ansprüche 16 bis 18, **dadurch gekennzeichnet, dass** das Polyisocyanat ein Vernetzungsverhältnis von NCO zu OH zwischen 1,0 und 15,0 und / oder ein Vernetzungsverhältnis von NCO zu NHₓR₃₋ₓ zwischen 1,0 und 5,0 hat, wobei x einen Wert zwischen 0,1 und 2,9 annehmen kann.

20. Polymermischung nach einem der Ansprüche 16 bis 19, **dadurch gekennzeichnet, dass** das Polyisocyanat auf der Basis eines Hexamethylendiisocyanats (HDI) und / oder Isophorondiisocyanats (IPDI) und / oder 4,4'-Dicyclohexylmethandiisocyanats (H₁₂MDI) und / oder Hexahydrotoluylendiisocyanats (H₆TDI) ist.

21. Polymermischung nach Anspruch 20, **dadurch gekennzeichnet, dass** das Polyisocyanat auf der Basis eines Hexamethylendiisocyanats (HDI) ein Isocyanurat ist.

22. Polymermischung nach Anspruch 20, **dadurch gekennzeichnet, dass** das Polyisocyanat auf der Basis eines Hexamethylendiisocyanats (HDI) als Biuret oder Uretdion oder Allophanat oder Iminooxadiazindion vorliegt.

23. Polymermischung nach Anspruch 20, **dadurch gekennzeichnet, dass** das Polyisocyanat auf der Basis eines Isophorondiisocyanats (IPDI) ein Isocyanurat ist.

24. Polymermischung nach Anspruch 20, **dadurch gekennzeichnet, dass** das Polyisocyanat auf der Basis eines Isophorondiisocyanats (IPDI) ein Allophanat ist.

25. Polymermischung nach Anspruch 20, **dadurch gekennzeichnet, dass** das Polyisocyanat auf der Basis eines Hexahydrotoluylendiisocyanats (H₆TDI) ein Isocyanurat ist.

26. Polymermischung nach Anspruch 20, **dadurch gekennzeichnet, dass** das Polyisocyanat auf der Basis eines Hexahydrotoluylendiisocyanats (H₆TDI) als Iminooxadiazindion vorliegt.

27. Polymermischung nach einem der Ansprüche 1 bis 26, **dadurch gekennzeichnet, dass** der NCO-Gehalt der durch den Vernetzer oder durch das Vernetzersystem vernetzten Polymermischung zwischen 0,2 und 9,0% liegt.

28. Polymermischung nach einem der Ansprüche 1 bis 27, **dadurch gekennzeichnet, dass** sie 0,1 bis 50 Gew. -% eines Mattierungsmittels enthält.

29. Polymermischung nach einem der Ansprüche 1 bis 28, **dadurch gekennzeichnet, dass** sie wenigstens 0,5 Gew. -%, eines Mattierungsmittels enthält.

30. Polymermischung nach einem der Ansprüche 1 bis 29, **dadurch gekennzeichnet, dass** das Mattierungsmittel auf der Basis einer wässrigen Polyurethan-Dispersion ist.

31. Polymermischung nach einem der Ansprüche 1 bis 30, **dadurch gekennzeichnet, dass** das Mattierungsmittel auf der Basis polymerorganischer Verbindungen mattiert.

32. Polymermischung nach einem der Ansprüche 1 bis 31, **dadurch gekennzeichnet, dass** sie wenigstens 0,1 Gew. -%, insbesondere wenigstens 0,5 Gew. -%, eines Verdünnungsmittels enthält.

33. Polymermischung nach einem der Ansprüche 1 bis 32, **dadurch gekennzeichnet, dass** sie als Verdünnungsmittel ein Gemisch aus Wasser und 2-Propanol in veränderlichen Gewichtsanteilen enthält.

34. Polymermischung nach einem der Ansprüche 1 bis 33, **dadurch gekennzeichnet, dass** sie 0 bis 45,0 Gew. -% weitere Zusatzstoffe, bezogen auf den nicht-flüchtigen Anteil der Gesamtmenge der Polymere in der Polymermischung, enthält.

35. Polymermischung nach einem der Ansprüche 1 bis 34, **dadurch gekennzeichnet, dass** das die Zusatzstoffe ausgewählt sind aus der Gruppe, bestehend aus Lichtschutzmitteln, wie UV-Absorber und reversible Radikalfänger, und / oder Antioxidationsmittel und / oder Netzmittel und / oder Substratnetzmittel und / oder Emulgatoren und / oder Verlaufmittel und / oder filmbildende Hilfsmittel und / oder Rheologiehilfsmittel und / oder Flammschutzmittel und / oder Biozide und / oder Neutralisationsmittel und / oder Entschäumer und / oder Verdicker und / oder anorganische Füllstoffe und / oder organische Füllstoffe und / oder Pigmente.

36. Polymermischung nach einem der Ansprüche 1 bis 35, **dadurch gekennzeichnet, dass** 0 bis 25 Gew. -% organische Füllstoffe und / oder anorganische Füllstoffe und / oder Pigmente enthalten sind.

37. Polymermischung nach einem der Ansprüche 1 bis 36, **dadurch gekennzeichnet, dass** sie wenigstens 0,1 Gew. -%, insbesondere wenigstens 0,5 Gew. -%, weitere Zusatzstoffe enthält.

38. Abriebfestes Produkt mit einer Oberfläche aus einer Polymermischung nach einem der Ansprüche 1 bis 37.

39. Abriebfestes Produkt nach Anspruch 38 in Form einer Armaturentafel oder eines Innenverkleidungsteils, insbesondere eines Sitzbespannmaterials, für ein Fahrzeug.

40. Verwendung einer Polymermischung nach einem der Ansprüche 1 bis 37 als abriebfestes Material.

41. Verwendung einer Polymermischung nach Anspruch 40 als abriebfestes Material zur Herstellung einer Armaturentafel oder eines Innenverkleidungsteils, insbesondere eines Sitzbespannmaterials, für ein Fahrzeug.

42. Verwendung einer Polymermischung nach einem der Ansprüche 1 bis 37 als Beschichtungsmaterial.

43. Verwendung einer Polymermischung nach Anspruch 42 als einschichtiges oder mehrschichtiges Beschichtungsmaterial mit einer resultierenden Gesamttrockenschichtdicke zwischen 0,5 und 50 g/m².

## Claims

1. Polymer mixture, particularly for decorative surfaces in an automobile interior, **characterized by** the following composition:
- 0% to 50% by weight of at least one aqueous polyurethane dispersion and/or polyester dispersion and/or polyether dispersion and/or polyester-polyacrylate dispersion and/or polyacrylate-polyurethane dispersion and/or polyacrylate -dispersion and/or of a dispersion based on at least one of these and/or two or more other polymers;
- 1% to 60% by weight of at least one aqueous polyurethane dispersion and/or polyesterpolyol dispersion and/or polyetherpolyol dispersion and/or polyacrylatepolyol dispersion and/or of a dispersion based on at least one of these and/or two or more other polymers, the polymer or at least one polymer being functionalized with OH groups and/or NH groups and possessing an OH content or NH content of between 0.3% and 6.0% by weight, based on the nonvolatile fraction of the total amount of the polymers;
- 0.1% to 40% by weight of at least one nonfunctionalized slip additive;
- 1% to 40% by weight of at least one functionalized slip additive;
- 0.2% to 50% by weight of at least one crosslinker or crosslinker system;
- 0.1% to 75% by weight of at least one matting agent;
- 0% to 50% by weight of diluent(s);
- 0% to 50% by weight of other adjuvants, based on the nonvolatile fraction of the total amount of polymers.

2. Polymer mixture according to Claim 1, **characterized in that** it comprises at least 0.1%, more particularly at least 0.5%, by weight of an aqueous polyurethane dispersion and/or polyester dispersion and/or polyether dispersion and/or polyester-polyacrylate dispersion and/or polyacrylate-polyurethane dispersion and/or polyacrylate dispersion and/or of a dispersion based on at least one of these and/or two or more other polymers.

3. Polymer mixture according to Claim 1 or 2, **characterized in that** it possesses 2.5% to 40% of an aqueous polyurethane dispersion and/or polyesterpolyol dispersion and/or polyetherpolyol dispersion and/or polyacrylatepolyol dispersion and/or of a dispersion based on at least one of these and/or two or more other polymers, the polymer or at least one polymer being functionalized with OH groups and/or NH groups and having an OH content and/or NH content of between 0.3% and 6.0% by weight, based on the nonvolatile fraction of the total amount of the polymers.

4. Polymer mixture according to any of Claims 1 to 3, **characterized in that** it comprises an aqueous polyurethane dispersion functionalized with OH groups.

5. Polymer mixture according to Claim 4, **characterized in that** the amount of OH groups in the aqueous polyurethane dispersion functionalized with OH groups is between 0.5% and 5.0% by weight, based on the nonvolatile fraction of the polymer.

6. Polymer mixture according to any of Claims 1 to 5, **characterized in that** it contains 0.1% to 30% by weight of a nonfunctionalized slip additive.

7. Polymer mixture according to any of Claims 1 to 6, **characterized in that** it contains at least 0.5% by weight of a nonfunctionalized slip additive.

8. Polymer mixture according to any of Claims 1 to 7, **characterized in that** the nonfunctionalized slip additive is a polydialkylsiloxane and/or polydimethylsiloxane (PDMS) and/or modified polysiloxanes and/or branched polyorganosiloxanes and/or polyolefinic waxes and/or polyamide waxes and/or polytetrafluoroethylene (PTFE) and/or alternating ethylene-chlorotrifluoroethylene copolymers (ECTFE) and/or perfluorinated alkoxy resins (PFA) and/or natural waxes.

9. Polymer mixture according to any of Claims 1 to 8, **characterized in that** the nonfunctionalized slip additive is a polydimethylsiloxane.

10. Polymer mixture according to Claim 9, **characterized in that** the polydimethylsiloxane has between 10 and 14 000 D silicone structural units.

11. Polymer mixture according to any of Claims 1 to 10, **characterized in that** it contains 1%to30% by weight of a functionalized slip additive.

12. Polymer mixture according to any of Claims 1 to 11, **characterized in that** the functionalized slip additive is a functionalized and modified polysiloxane slip additive.

13. Polymer mixture according to Claim 12, **characterized in that** the functionalized slip additive is modified with primary and/or secondary and/or tertiary amino groups and/or OH groups.

14. Polymer mixture according to Claim 12 or 13, **characterized in that** the functionalized slip additive has an amine number of between 0.1 and 3.0 mg KOH/g and/or an OH content of between 0.3% and 5.0% by weight.

15. Polymer mixture according to any of Claims 1 to 14, **characterized in that** the total amount of nonfunctionalized slip additive and functionalized slip additive is 1% to 40% by weight, based on the nonvolatile fraction of the total amount of the slip additives relative to the nonvolatile fraction of the total amount of all the constituents of the polymer mixture.

16. Polymer mixture according to any of Claims 1 to 15, **characterized in that** the crosslinker or the crosslinker system is based on at least one polyisocyanate and/or polyepoxide and/or epoxysilane and/or alkoxymethylamine and/or urea resin and/or is based on at least one polycarbodiimide and/or polyaziridine.

17. Polymer mixture according to any of Claims 1 to 16, **characterized in that** the crosslinker or the crosslinker system is based on a polyisocyanate.

18. Polymer mixture according to Claim 17, **characterized in that** the polyisocyanate has an NCO fraction of between 5% and 30% by weight.

19. Polymer mixture according to any of Claims 16 to 18, **characterized in that** the polyisocyanate has a crosslinking ratio of NCO to OH of between 1.0 and 15.0 and/or a crosslinking ratio of NCO to NHₓR₃₋ₓ of between 1.0 and 5.0, where x may adopt a value between 0.1 and 2.9.

20. Polymer mixture according to any of Claims 16 to 19, **characterized in that** the polyisocyanate is based on a hexamethylene diisocyanate (HDI) and/or isophorone diisocyanate (IPDI) and/or 4,4'-dicyclohexylmethane diisocyanate (H₁₂MDI) and/or hexahydrotolylene diisocyanate (H₆TDI).

21. Polymer mixture according to Claim 20, **characterized in that** the polyisocyanate based on a hexamethylene diisocyanate (HDI) is an isocyanurate.

22. Polymer mixture according to Claim 20, **characterized in that** the polyisocyanate based on a hexamethylene diisocyanate (HDI) is present as a biuret or uretdione or allophanate or iminooxadiazinedione.

23. Polymer mixture according to Claim 20, **characterized in that** the polyisocyanate based on an isophorone diisocyanate (IPDI) is an isocyanurate.

24. Polymer mixture according to Claim 20, **characterized in that** the polyisocyanate based on an isophorone diisocyanate (IPDI) is an allophanate.

25. Polymer mixture according to Claim 20, **characterized in that** the polyisocyanate based on a hexahydrotolylene diisocyanate (H₆TDI) is an isocyanurate.

26. Polymer mixture according to Claim 20, **characterized in that** the polyisocyanate based on a hexahydrotolylene diisocyanate (H₆TDI) is present as an iminooxadiazinedione.

27. Polymer mixture according to any of Claims 1 to 26, **characterized in that** the NCO content of the polymer mixture crosslinked by the crosslinker or by the crosslinker system is between 0.2% and 9.0%.

28. Polymer mixture according to any of Claims 1 to 27, **characterized in that** it contains 0.1% to 50% by weight of a matting agent.

29. Polymer mixture according to any of Claims 1 to 28, **characterized in that** it contains at least 0.5% by weight of a matting agent.

30. Polymer mixture according to any of Claims 1 to 29, **characterized in that** the matting agent is based on an aqueous polyurethane dispersion.

31. Polymer mixture according to any of Claims 1 to 30, **characterized in that** the matting agent effects matting based on polymer-organic compounds.

32. Polymer mixture according to any of Claims 1 to 31, **characterized in that** it contains at least 0.1% by weight, more particularly at least 0.5% by weight, of a diluent.

33. Polymer mixture according to any of Claims 1 to 32, **characterized in that** it comprises as diluent a mixture of water and 2-propanol in varying weight proportions.

34. Polymer mixture according to any of Claims 1 to 33, **characterized in that** it contains 0% to 45.0% by weight of other adjuvants, based on the nonvolatile fraction of the total amount of the polymers in the polymer mixture.

35. Polymer mixture according to any of Claims 1 to 34, **characterized in that** the adjuvants are selected from the group consisting of light stabilizers, such as UV absorbers and reversible free-radical scavengers, and/or antioxidants and/or wetting agents and/or substrate-wetting agents and/or emulsifiers and/or flow control agents and/or film-forming assistants and/or rheological assistants and/or flame retardants and/or biocides and/or neutralizing agents and/or defoamers and/or thickeners and/or inorganic fillers and/or organic fillers and/or pigments.

36. Polymer mixture according to any of Claims 1 to 35, **characterized in that** there are 0% to 25% by weight of organic fillers and/or inorganic fillers and/or pigments present.

37. Polymer mixture according to any of Claims 1 to 36, **characterized in that** it contains at least 0.1% by weight, more particularly at least 0.5% by weight, of other adjuvants.

38. Abrasion-resistant product having a surface comprising a polymer mixture according to any of Claims 1 to 37.

39. Abrasion-resistant product according to Claim 38 in the form of a dashboard or interior trim part, more particularly a seat covering material, for a vehicle.

40. Use of a polymer mixture according to any of Claims 1 to 37 as abrasion-resistant material.

41. Use of a polymer mixture according to Claim 40 as abrasion-resistant material for producing a dashboard or an interior trim part, more particularly a seat covering material, for a vehicle.

42. Use of a polymer mixture according to any of Claims 1 to 37 as coating material.

43. Use of a polymer mixture according to Claim 42 as single-coat or multicoat coating material with a resultant overall dry film thickness of between 0.5 and 50 g/m².

## Revendications

1. Mélange de polymères, notamment pour surfaces décoratives d'habitacles de véhicules automobiles, **caractérisé par** la composition suivante :
- 0 à 50 % en poids d'au moins une dispersion aqueuse de polyuréthane et/ou d'une dispersion de polyester et/ou d'une dispersion de polyéther et/ou d'une dispersion de polyester-polyacrylate et/ou d'une dispersion de polyacrylate-polyuréthane et/ou d'une dispersion de polyacrylate et/ou d'une dispersion à base d'au moins un de ces polymères et/ou de plusieurs autres polymères ;
- 1 à 60 % en poids d'au moins une dispersion aqueuse de polyuréthane et/ou d'une dispersion de polyester-polyol et/ou d'une dispersion de polyéther-polyol et/ou d'une dispersion de polyacrylate-polyol et/ou d'une dispersion à base d'au moins un de ces polymères et/ou de plusieurs autres polymères, le polymère ou au moins un polymère étant fonctionnalisé avec des groupes OH et/ou des groupes NH et présentant une teneur en OH ou une teneur en NH comprise entre 0,3 et 6,0 % en poids, par rapport à la fraction non volatile de la quantité totale des polymères ;
- 0,1 à 40 % en poids d'au moins un additif de lubrification non fonctionnalisé ;
- 1 à 40 % en poids d'au moins un additif de lubrification fonctionnalisé ;
- 0,2 à 50 % en poids d'au moins un agent de réticulation ou système de réticulation ;
- 0,1 à 75 % en poids d'au moins un agent de matage ;
- 0 à 50 % en poids d'un diluant ;
- 0 à 50 % en poids d'autres additifs, par rapport à la fraction non volatile de la quantité totale des polymères.

2. Mélange de polymères selon la revendication 1, **caractérisé en ce qu'**il contient au moins 0,1 % en poids, notamment au moins 0,5 % en poids d'une dispersion aqueuse de polyuréthane et/ou d'une dispersion de polyester et/ou d'une dispersion de polyéther et/ou d'une dispersion de polyester-polyacrylate et/ou d'une dispersion de polyacrylate-polyuréthane et/ou d'une dispersion de polyacrylate et/ou d'une dispersion à base d'au moins un de ces polymères et/ou de plusieurs autres polymères.

3. Mélange de polymères selon la revendication 1 ou 2, **caractérisé en ce qu'**il contient 2,5 à 40 % en poids d'une dispersion aqueuse de polyuréthane et/ou d'une dispersion de polyester-polyol et/ou d'une dispersion de polyéther-polyol et/ou d'une dispersion de polyacrylate-polyol et/ou d'une dispersion à base d'au moins un de ces polymères et/ou de plusieurs autres polymères, le polymère ou au moins un polymère étant fonctionnalisé avec des groupes OH et/ou des groupes NH et présentant une teneur en OH et/ou une teneur en NH comprise entre 0,3 et 6,0 % en poids, par rapport à la fraction non volatile de la quantité totale des polymères.

4. Mélange de polymères selon l'une quelconque des revendications 1 à 3, **caractérisé en ce qu'**il contient une dispersion de polyuréthane aqueuse et fonctionnalisée avec des groupes OH.

5. Mélange de polymères selon la revendication 4, **caractérisé en ce que** la teneur en groupes OH de la dispersion de polyuréthane aqueuse et fonctionnalisée avec des groupes OH est comprise entre 0,5 et 5,0 % en poids, par rapport à la fraction non volatile du polymère.

6. Mélange de polymères selon l'une quelconque des revendications 1 à 5, **caractérisé en ce qu'**il contient 0,1 à 30 % en poids d'un additif de lubrification non fonctionnalisé.

7. Mélange de polymères selon l'une quelconque des revendications 1 à 6, **caractérisé en ce qu'**il contient au moins 0,5 % en poids d'un additif de lubrification non fonctionnalisé.

8. Mélange de polymères selon l'une quelconque des revendications 1 à 7, **caractérisé en ce que** l'additif de lubrification non fonctionnalisé est un polydialkylsiloxane et/ou un polydiméthylsiloxane (PDMS) et/ou des polysiloxanes modifiés et/ou des polyorganosiloxanes ramifiés et/ou des cires polyoléfiniques et/ou des cires de polyamide et/ou un polytétrafluoroéthylène (PTFE) et/ou des copolymères d'éthylène-chloro-tri-fluoroéthylène alternés (ECTFE) et/ou des résines alcoxy perfluorées (PFA) et/ou des cires naturelles.

9. Mélange de polymères selon l'une quelconque des revendications 1 à 8, **caractérisé en ce que** l'additif de lubrification non fonctionnalisé est un polydiméthylsiloxane.

10. Mélange de polymères selon la revendication 9, **caractérisé en ce que** le polydiméthylsiloxane contient entre 10 et 14 000 unités constitutives de silicone D.

11. Mélange de polymères selon l'une quelconque des revendications 1 à 10, **caractérisé en ce qu'**il contient 1 à 30 % en poids d'un additif de lubrification fonctionnalisé.

12. Mélange de polymères selon l'une quelconque des revendications 1 à 11, **caractérisé en ce que** l'additif de lubrification fonctionnalisé est un additif de lubrification polysiloxane fonctionnalisé et modifié.

13. Mélange de polymères selon la revendication 12, **caractérisé en ce que** l'additif de lubrification fonctionnalisé est modifié avec des groupes amino et/ou des groupes OH primaires et/ou secondaires et/ou tertiaires.

14. Mélange de polymères selon la revendication 12 ou 13, **caractérisé en ce que** l'additif de lubrification fonctionnalisé a un indice d'amine compris entre 0,1 et 3,0 mg KOH/g et/ou une teneur en OH comprise entre 0,3 et 5,0 % en poids.

15. Mélange de polymères selon l'une quelconque des revendications 1 à 14, **caractérisé en ce que** la quantité totale d'additif de lubrification non fonctionnalisé et d'additif de lubrification fonctionnalisé est de 1 à 40 % en poids, par rapport à la fraction non volatile de la quantité totale des additifs de lubrification sur la fraction non volatile de la quantité totale de tous les constituants du mélange de polymères.

16. Mélange de polymères selon l'une quelconque des revendications 1 à 15, **caractérisé en ce que** l'agent de réticulation ou le système de réticulation est à base d'au moins un polyisocyanate et/ou d'un polyépoxyde et/ou d'un époxysilane et/ou d'une alcoxyméthylmélamine et/ou d'une résine d'urée et/ou à base d'au moins un polycarbodiimide et/ou d'une polyaziridine.

17. Mélange de polymères selon l'une quelconque des revendications 1 à 16, **caractérisé en ce que** l'agent de réticulation ou le système de réticulation est à base d'un polyisocyanate.

18. Mélange de polymères selon la revendication 17, **caractérisé en ce que** le polyisocyanate a une proportion de NCO comprise entre 5 et 30 % en poids.

19. Mélange de polymères selon l'une quelconque des revendications 16 à 18, **caractérisé en ce que** le polyisocyanate présente un rapport de réticulation de NCO sur OH compris entre 1,0 et 15,0 et/ou un rapport de réticulation de NCO sur NHₓR₃₋ₓ compris entre 1,0 et 5,0, x pouvant prendre une valeur comprise entre 0,1 et 2,9.

20. Mélange de polymères selon l'une quelconque des revendications 16 à 19, **caractérisé en ce que** le polyisocyanate est à base d'un diisocyanate d'hexaméthylène (HDI) et/ou d'un diisocyanate d'isophorone (IPDI) et/ou d'un diisocyanate de 4,4'-dicyclohexylméthane (H₁₂MDI) et/ou d'un diisocyanate d'hexahydrotoluylène (H₆TDI).

21. Mélange de polymères selon la revendication 20, **caractérisé en ce que** le polyisocyanate à base d'un diisocyanate d'hexaméthylène (HDI) est un isocyanurate.

22. Mélange de polymères selon la revendication 20, **caractérisé en ce que** le polyisocyanate à base d'un diisocyanate d'hexaméthylène (HDI) se présente sous la forme d'un biuret ou d'une uretdione ou d'un allophanate ou d'une iminooxadiazine-dione.

23. Mélange de polymères selon la revendication 20, **caractérisé en ce que** le polyisocyanate à base d'un diisocyanate d'isophorone (IPDI) est un isocyanurate.

24. Mélange de polymères selon la revendication 20, **caractérisé en ce que** le polyisocyanate à base d'un diisocyanate d'isophorone (IPDI) est un allophanate.

25. Mélange de polymères selon la revendication 20, **caractérisé en ce que** le polyisocyanate à base d'un diisocyanate d'hexahydrotoluylène (H₆TDI) est un isocyanurate.

26. Mélange de polymères selon la revendication 20, **caractérisé en ce que** le polyisocyanate à base d'un diisocyanate d'hexahydrotoluylène (H₆TDI) se présente sous la forme d'une iminooxadiazine-dione.

27. Mélange de polymères selon l'une quelconque des revendications 1 à 26, **caractérisé en ce que** la teneur en NCO du mélange de polymères réticulé par l'agent de réticulation ou par le système de réticulation est comprise entre 0,2 et 9,0 %.

28. Mélange de polymères selon l'une quelconque des revendications 1 à 27, **caractérisé en ce qu'**il contient 0,1 à 50 % en poids d'un agent de matage.

29. Mélange de polymères selon l'une quelconque des revendications 1 à 28, **caractérisé en ce qu'**il contient au moins 0,5 % en poids d'un agent de matage.

30. Mélange de polymères selon l'une quelconque des revendications 1 à 29, **caractérisé en ce que** l'agent de matage est à base d'une dispersion aqueuse de polyuréthane.

31. Mélange de polymères selon l'une quelconque des revendications 1 à 30, **caractérisé en ce que** l'agent de matage matifie à base de composés organiques polymères.

32. Mélange de polymères selon l'une quelconque des revendications 1 à 31, **caractérisé en ce qu'**il contient au moins 0,1 % en poids, notamment au moins 0,5 % en poids, d'un diluant.

33. Mélange de polymères selon l'une quelconque des revendications 1 à 32, **caractérisé en ce qu'**il contient en tant que diluant un mélange d'eau et de 2-propanol en des proportions en poids variables.

34. Mélange de polymères selon l'une quelconque des revendications 1 à 33, **caractérisé en ce qu'**il contient 0 à 45,0 % en poids d'autres additifs, par rapport à la fraction non volatile de la quantité totale des polymères dans le mélange de polymères.

35. Mélange de polymères selon l'une quelconque des revendications 1 à 34, **caractérisé en ce que** les additifs sont choisis dans le groupe constitué par les agents photoprotecteurs, tels que les absorbeurs UV et les capteurs de radicaux réversibles, et/ou les antioxydants et/ou les agents mouillants et/ou les agents mouillants les substrats et/ou les émulsifiants et/ou les agents d'étalement et/ou les adjuvants filmogènes et/ou les adjuvants de rhéologie et/ou les agents ignifuges et/ou les biocides et/ou les agents de neutralisation et/ou les agents antimousse et/ou les épaississants et/ou les charges inorganiques et/ou les charges organiques et/ou les pigments.

36. Mélange de polymères selon l'une quelconque des revendications 1 à 35, **caractérisé en ce que** 0 à 25 % en poids de charges organiques et/ou de charges inorganiques et/ou de pigments sont contenus.

37. Mélange de polymères selon l'une quelconque des revendications 1 à 36, **caractérisé en ce qu'**il contient au moins 0,1 % en poids, notamment au moins 0,5 % en poids, d'autres additifs.

38. Produit résistant à l'abrasion comprenant une surface en un mélange de polymères selon l'une quelconque des revendications 1 à 37.

39. Produit résistant à l'abrasion selon la revendication 38 sous la forme d'un tableau de bord ou d'une partie d'habillage intérieur, notamment d'un matériau de housse de siège, pour un véhicule automobile.

40. Utilisation d'un mélange de polymères selon l'une quelconque des revendications 1 à 37 en tant que matériau résistant à l'abrasion.

41. Utilisation d'un mélange de polymères selon la revendication 40 en tant que matériau résistant à l'abrasion pour la fabrication d'un tableau de bord ou d'une partie d'habillage intérieur, notamment d'un matériau de housse de siège, pour un véhicule automobile.

42. Utilisation du mélange de polymères selon l'une quelconque des revendications 1 à 37 en tant que matériau de revêtement.

43. Utilisation d'un mélange de polymères selon la revendication 42 en tant que matériau de revêtement monocouche ou multicouche ayant une épaisseur de couche sèche totale résultante comprise entre 0,5 et 50 g/m².
